Europäisches Patentamt

European Patent Office

Office européen des brevets

(19)

(11) Veröffentlichungsnummer: **0 281 639**
B1

(12) **EUROPÄISCHE PATENTSCHRIFT**

(45) Veröffentlichungstag der Patentschrift:
11.07.90

(51) Int. Cl.⁵: **A01B 15/14, B60D 1/00**

(21) Anmeldenummer: **87102997.1**

(22) Anmeldetag: **03.03.87**

(54) Landwirtschaftliche Anbauvorrichtung.

(43) Veröffentlichungstag der Anmeldung:
**14.09.88 Patentblatt 88/37**

(73) Patentinhaber: **Rabewerk GmbH + Co., D-4515 Bad Essen(DE)**

(45) Bekanntmachung des Hinweises auf die Patenterteilung:
**11.07.90 Patentblatt 90/28**

(72) Erfinder: **Reker, Stefan, Dipl.-Ing., Breslaustrasse 1, D-4508 Bohmte(DE)**

(84) Benannte Vertragsstaaten:
**DE FR GB IT**

(74) Vertreter: **Missling, Arne, Dipl.-Ing., Patentanwalt Bismarckstrasse 43, D-6300 Giessen(DE)**

(56) Entgegenhaltungen:
**DE-A- 3 305 338
DE-B- 1 032 958
FR-A- 1 231 188
FR-A- 1 505 702
GB-A- 1 371 324
SU-A- 1 152 811
US-A- 2 187 380**

**Beschreibung**

Die Erfindung betrifft eine Anbauvorrichtung zur Verwendung im Ackerbau, in Baumplantagen und dergleichen, wobei eine Zugmaschine ein Arbeitsgerät mit einem Zugbalken trägt, an dem die Anbauvorrichtung angreift, welche einen Druckzylinder aufweist, der einerseits mit einem Schlitten und andererseits mit einem Träger einer im wesentlichen quer zur Fahrtrichtung verlaufenden Gleitführung verbunden ist.

Es gibt bereits Pflüge, die in Bezug auf den sie bewegenden Schlepper seitlich verschoben werden können, z.B. zwischen einer Transportstellung und einer Arbeitsstellung.

Für Grenzpflüge hat man Kulissenführungen vorgesehen, die eine solche Verschiebung ermöglichen. Die FR-PS 1 231 188 beschreibt einen Rahmen mit zwei parallelen Profilholmen, auf denen je eine Gleithülse seitlich verschiebbar und mittels eines Klemmhebels festsetzbar ist. Die eine Gleithülse ist an die Pflugkoppel angelenkt, die ein Gelenk für eine Teleskop-Zugstange trägt. Diese ist ihrerseits schwenk- und festsetzbar mit dem geschleppten Gerät verbunden, das an der anderen Gleithülse starr befestigt ist. Nach Lösen der Klemmhebel lassen sich die Gleithülsen auf ihren Holmen versetzen, was von Hand geschehen muß.

Bekannt ist auch eine hydraulische Verstelleinrichtung gemäß der GB-PS 1 371 324. Dabei trägt der Schlepper einen breiten und schweren Querrahmen mit einem liegenden Druckzylinder, dessen Kolbenstange in der Mitte eines zweiten, verschieblichen Rahmens angreift, um ihn hin und her zu schieben, Die Halterung und die Führungsteile ragen jedoch seitlich sehr weit über den Schlepper hinaus, Dies ist eine in der Praxis sehr störende und oft nicht hinnehmbare Beeinträchtigung. Insbesondere auf der Straße darf das Gerät nämlich nicht seitlich überstehen. Ist das Verschiebungsmaß gleich dem Hub des Zylinders, beispielsweise 1 m, so ergibt sich eine sehr große ausgefahrene Länge von einem Anlenkungspunkt zum anderen; im genannten Beispiel sind es rund 2,2 m. Das führt zu hoher Knickgefahr. Die auftretenden Kräfte und Momente bewirken ferner eine starke Reibung an den gleitenden Teilen und infolgedessen großen Verschleiß. Nachteilig ist ferner, daß bei der vorbekannten Anhängung eine mittlere Schwerpunktlage hinter dem Schlepper nicht einstellbar ist, was aber zumindest für Drehpflüge erwünscht wäre.

Außerdem beschreibt die SU-A 1 152 811 eine Anbauvorrichtung mit einem quer zur Fahrtrichtung angeordneten Kettentrieb, womit ein Träger verschwenkt wird, an dem die Zugstange eines Folgegerätes angelenkt ist. Dessen seitliche Versetzung erfolgt mit gleichzeitiger Abstandsänderung zum Schlepper und verhältnismäßig wenig genau, so daß z.B. eine streng furchengeführte Arbeit kaum oder nicht möglich ist. Ein verstellbarer Schlitten ist nicht vorhanden. Die Vorrichtung ist nur zur Verwendung mit einem Gerät geeignet, das wie ein Anhänger nachgeschleppt werden kann.

Es besteht mithin ein Bedürfnis an einer verbesserten Anbauvorrichtung, die eine möglichst große seitliche Verlagerung bei insgesamt möglichst kleiner Vorrichtungsbreite erlaubt. Die Vorrichtung soll einfach aufgebaut und bequem zu bedienen sein; sie soll ferner hohe Festigkeit aufweisen, um allen Beanspruchungen eines rauhen Betriebes gewachsen zu sein.

Hauptmerkmale der Erfindung sind im kennzeichnenden Teil von Anspruch 1 angegeben. Ausgestaltungen sind Gegenstand der Ansprüche 2 bis 10.

Die Erfindung sieht vor, daß Schlitten und Träger durch einen mittels des Druckzylinders betätigbaren Seil- oder Kettenzug verbunden sind, wobei dessen Enden einerseits an dem Schlitten und andererseits an dem Träger festgelegt sind. In der speziellen Weiterbildung laut Anspruch 2 ist der Druckzylinder doppeltwirkend und mit beidseitig durchgeführten Kolbenstangen versehen, deren Enden je eine Umlenkwalze oder -Rolle des Seil- oder Kettenzuges haltert. Damit ist auf überaus einfache und zuverlässige Weise die Ausfahrlänge praktisch halbiert und die Knickgefahr beseitigt. In der Transportstellung stehen keine Teile mehr seitlich über. Zugleich ist der Verschleiß an den gleitenden Flächen erheblich vermindert.

Gemäß Anspruch 3 kann der Schlitten mit der Drehwelle der Zugmaschine und der Träger mit einem Rahmenteil des Gerätes verbunden bzw. verbindbar sein. Für dessen Abstützung sieht Anspruch 4 eine konstruktiv günstige Anordnung vor.

Vorteilhaft ist der Träger nach Anspruch 5 als Hohlkasten mit Führungsstegen für den Schlitten ausgebildet und nach Anspruch 6 mit Gabelausnehmungen für den Durchtritt der Umlenkrollen versehen. Die so gestaltete Gleitführung schützt sowohl den Seil- oder Kettenzug als auch den Druckzylinder samt Kolbenstangen.

Die Weiterbildung nach Anspruch 7 besteht darin, daß der Druckzylinder an demjenigen Träger-Ende befestigt ist, das dem Gelenk gegenüberliegt Dies bedeutet, daß der Zylinder sich seitlich mitbewegt. Alternativ sieht Anspruch 8 vor, daß der Druckzylinder mit dem Schlitten 6 verbunden ist, während der Träger kulissengeführt verschieblich angeordnet ist.

Gemäß den Ansprüchen 9 und 10 ist wenigstens ein verstellbarer Anschlag zwischen Schlitten und Träger vorhanden, vorzugsweise in solcher Anordnung, daß das Gerät in wenigstens zwei vorgegebenen Seitenpositionen zum Schlepper fahrbar ist.

Weitere Merkmale, Einzelheiten und Vorteile ergeben sich aus dem Wort der Ansprüche sowie aus der folgenden Beschreibung von Ausführungsbeispielen anhand der Zeichnung. Darin zeigen:

Fig. 1 eine schematisierte Draufsicht auf eine Anbauvorrichtung nach der Erfindung,
Fig. 2 eine Seitenansicht eines Trägers,
Fig. 3 eine Stirnansicht des Trägers von Fig.2,
Fig. 4 eine Draufsicht auf den Träger von Fig. 2 und
Fig. 5 eine schematisierte Draufsicht auf eine abgewandelte Ausführung einer Anbauvorrichtung.

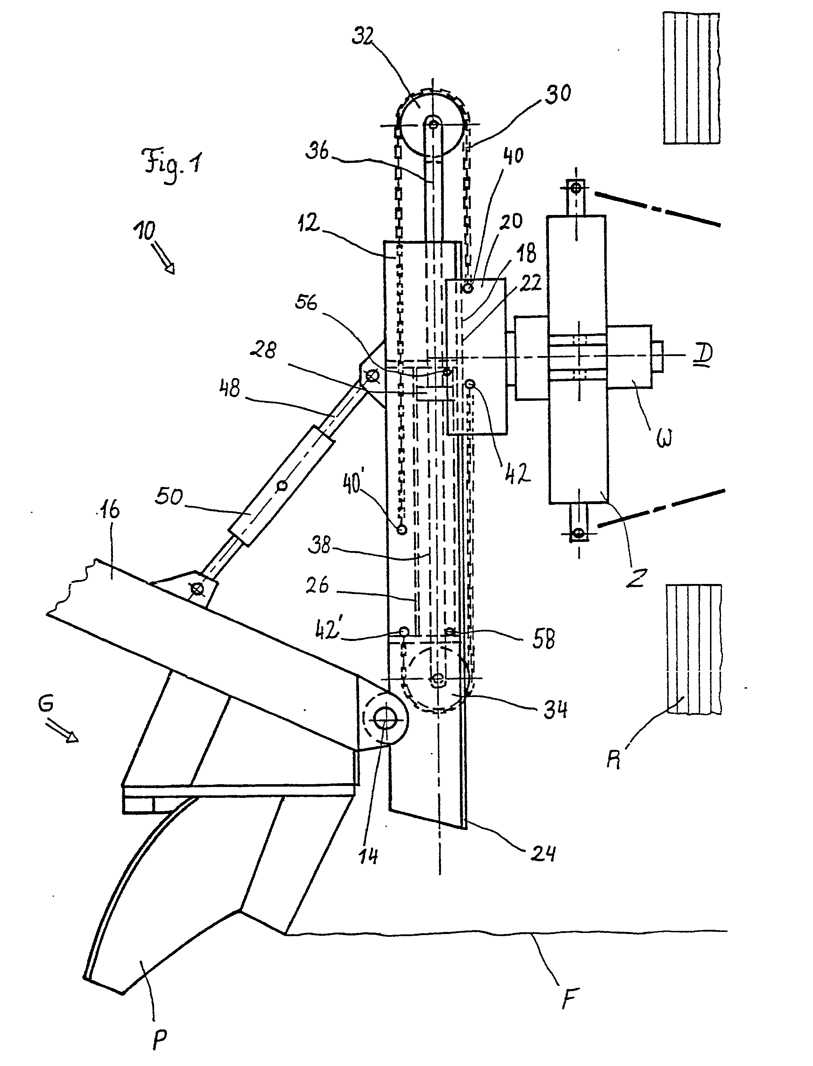

Von einer nicht weiter dargestellten Zugmaschine ist in Fig. 1 das Ende von Reifen oder Raupen R und ein Dreipunkt-Gestänge D angedeutet. Ferner ist eine Pflugkoppel Z und eine Drehwelle W vorhanden. Mit dieser ist die Anbauvorrichtung 10 in an sich bekannter Weise verbunden. Sie hat einen Träger 12, der mit einem Gerät G verbunden ist, und zwar im gezeichneten Ausführungsbeispiel über ein Gelenk 14 mit einem Pflugrahmen 16 sowie einem seitlich angedeuteten Pflugschar P. Mit F ist eine Furchenkante bezeichnet, an der das Gerät G entlanggeführt werden soll.

Zur Pflugkoppel Z hin hat die Vorrichtung 10 einen Schlitten 20, in Bezug auf den der Träger 12 in einer Gleitführung 18 verschieblich ist.Die Gleitführung 18 besteht aus einer Klauenkulisse 22 und den Führungsstegen 24.

Im Träger 12 ist ein Druckzylinder 26 mit einem Kolben 28 angeordnet, von dem beiderseits Kolbenstangen 36, 38 abstehen. Diese tragen an ihren Enden Umlenkrollen 32, 34 für einen Kettenzug 30. Das eine Trum des Kettenzuges 30 ist an Verbindungspunkten 40, 40' einerseits mit dem Schlitten 20, andererseits mit dem Träger 12 verbunden; entsprechend ist das andere Trum des Kettenzuges 30 am Verbindungspunkt 42 mit dem Schlitten 20 und am Verbindungspunkt 42' mit dem Träger 12 verbunden.

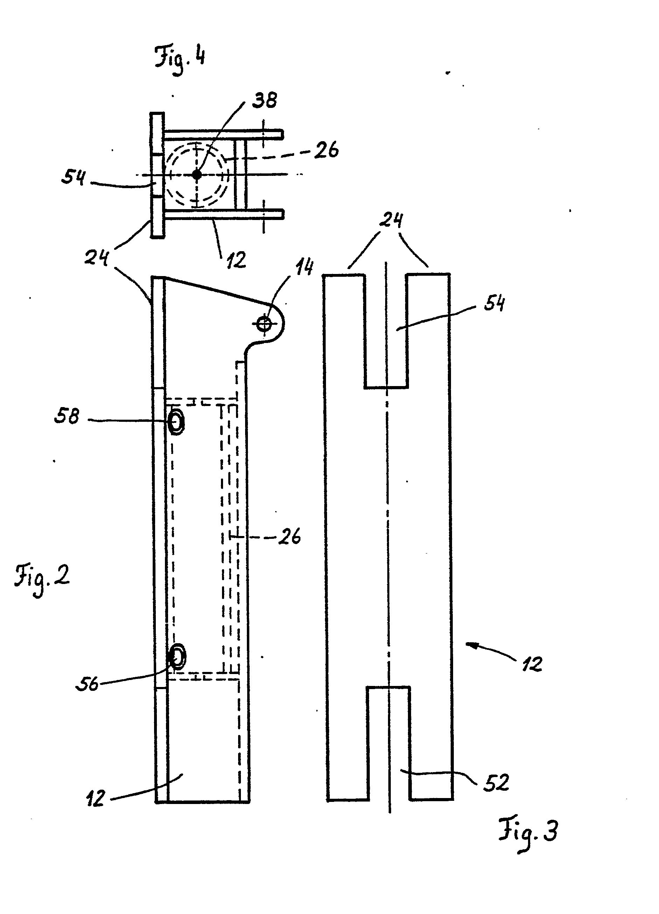

Wie aus den Fig. 2 bis 4 hervorgeht, hat der Träger 12 kastenartigen Aufbau, so daß der Druckzylinder 26 geschützt innen liegt und seine Kolbenstangen 36, 38 im Gehäuse zusätzlich geführt sein können. An den Enden haben die Führungsstege 24 Ausnehmungen 52 bzw. 54, die den Durchtritt der Umlenkrollen 32 bzw. 34 gestatten. Der doppeltwirkende Druckzylinder 26 hat an seinen entgegengesetzten Enden jeweils einen Druckmittelanschluß 56 bzw. 58.

In Fig. 1 ist die Grenzpflugstellung gezeichnet, in der sich der Kolben 28 am linken Ende des Druckzylinders 26 befindet. Wird der Druckmittel-Anschluß 56 beaufschlagt, so wird der Kolben 28 mit der Kolbenstange 38 nach rechts verschoben. Durch die mithin nach rechts ausfahrende Umlenkrolle 34 wird, weil der Kettenzug 30 am Verbindungspunkt 42 festhängt, der Träger 12 samt dem Gerät G nach links verlagert. Auf der anderen Seite des Kolbens 11 wird mit der Kolbenstange 36 die Umlenkrolle 32 ebenfalls in Bezug auf den Druckzylinder 26 relativ nach rechts bewegt, während in Wirklichkeit der Träger 12 nach links geht. Hierbei ist die Endstellung erreicht, wenn das rechte Ende der Führungsstege 24 etwa am rechten Ende des Schlittens 20 angekommen ist.

Wird der Druckmittel-Anschluß 58 mit Druck beaufschlagt, so bewegt der Kettenzug 30 den Träger 12 in Gegenrichtung, also äußerstens bis in die Grenzpflugstellung.

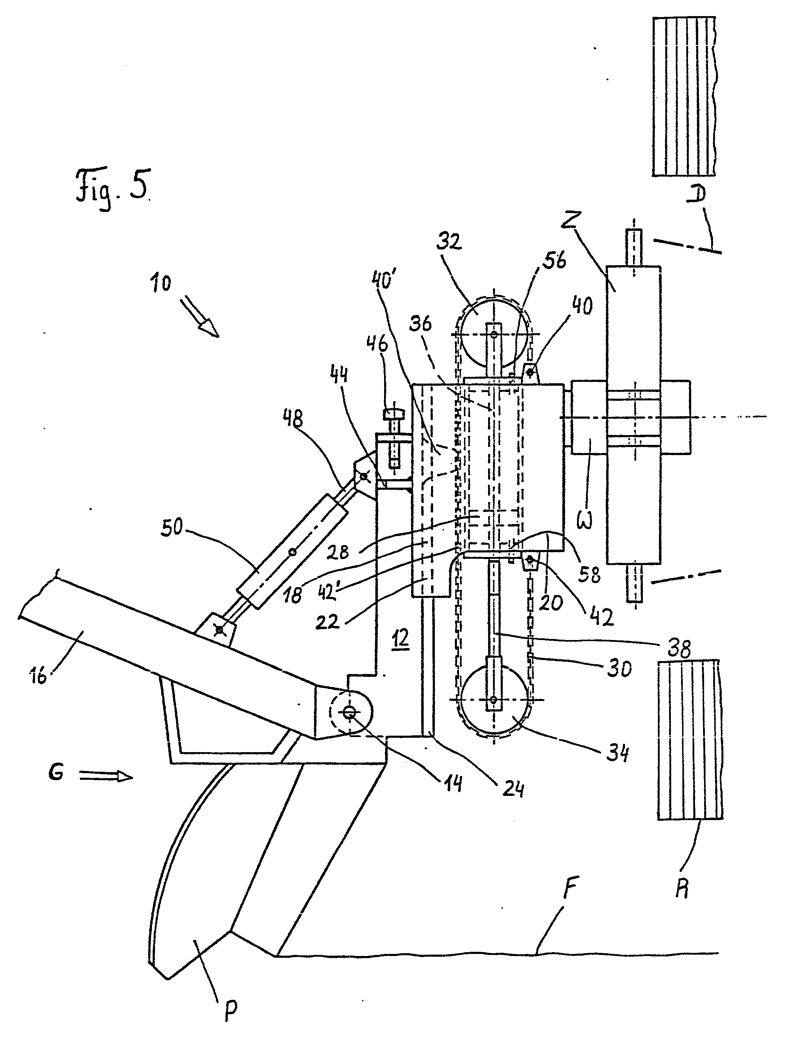

Während bei dem vorbeschriebenen Ausführungsbeispiel der Druckzylinder 26 seitlich mitbewegt wird, veranschaulicht Fig. 5 eine Anordnung, bei welcher der Druckzylinder 26 in dem kastenförmig ausgeführten Schlitten 20 ruht. Daher kann der Träger 12 einfacher gestaltet sein. Im übrigen sind Anordnung und Bewegungsfunktion dieselben wie oben erläutert.

Zusätzlich kann zwischen Schlitten 20 und Träger 12 ein insbesondere verstellbarer Anschlag vorgesehen sein. Fig.5 zeigt eine Anschlagplatte 44, die mit der Klauenkulisse 22 der Gleitführung 18 verbunden ist. Am Träger 12 ist außerdem eine Stellschraube 46 vorgesehen. Zweckmäßig ist eine solche Anordnung, daß nicht nur das Fahren neben der Furche F, sondern auch das Fahren des Schleppers in der Furche möglich wäre.

Wird der Kolben 28 im Druckzylinder 26 durch entsprechende Druck-Beaufschlagung nach links bewegt, so kommt der Träger 12 in die Transportstellung für das Gerät G. Wird die Anbauvorrichtung 10 für einen Drehpflug benutzt, so kann er in dieser Stellung gewendet werden.

Die erfindungsgemäße Anbauvorrichtung wurde vorstehend in Verbindung mit einem Pflug hinter einem Schlepper erläutert, der neben der Furche F fährt. Der Einsatz ist jedoch auch bei anderen landwirtschaftlichen Geräten oder Maschinen möglich, wo Geräteteile beträchtlich zur Seite verschoben werden sollen, beispielsweise Mähwerke. In Betracht kommt auch der Einsatz in Baumplantagen, um ein Gerät jeweils vor einem Baumstamm zurückzuziehen und danach wieder auszufahren.

**Patentansprüche**

1. Anbauvorrichtung zur Verwendung im Ackerbau, in Baumplantagen und dergleichen, wobei eine Zugmaschine ein Arbeitsgerät (G) mit einem Zugbalken trägt, an dem die Anbauvorrichtung (10) angreift, welche einen Druckzylinder (26) aufweist, der einerseits mit einem Schlitten (20) und andererseits mit einem Träger (12) einer im wesentlichen quer zur Fahrtrichtung verlaufenden Gleitführung (18) verbunden ist, dadurch gekennzeichnet, daß Schlitten (20) und Träger (12) durch einen mittels des Druckzylinders (26) betätigbaren Seil- oder Kettenzug (30) verbunden sind, wobei die Enden des über Umlenkwalzen bzw. -rollen (32, 34) geführten Seil- oder Kettenzuges (30) einerseits an dem Schlitten (20) und andererseits an dem Träger (12) festgelegt sind.

2. Vorrichtung nach Anspruch 1, dadurch gekennzeichnet, daß der Druckzylinder (26) doppeltwirkend und mit beidseitig durchstehenden Kolbenstangen (36, 38) versehen ist, deren Enden je eine Umlenkwalze oder -rolle (32 bzw. 34) des Seil- oder Kettenzuges (30) haltern.

3. Vorrichtung nach Anspruch 1 oder 2, dadurch gekennzeichnet, daß der Schlitten (20) mit der Drehwelle (W) des Gerätes (G) und der Träger (12) mit einem Rahmenteil (16) des Gerätes verbunden bzw. verbindbar ist.

4. Vorrichtung nach Anspruch 3, dadurch gekennzeichnet, daß ein Ende des Trägers (12) ein Gelenk (14) zur Verbindung mit dem Rahmenteil (16) aufweist und dieser im Abstand zu dem Gelenk (14) längenveränderlich an einem anderen Teil des Trägers (12) abgestützt ist ( Fig. 1 und 5).

5. Vorrichtung nach einem der Ansprüche 1 bis 4, dadurch gekennzeichnet, daß der Träger (12) als Hohlkasten mit Führungsstegen (24) für den Schlitten (20) ausgebildet ist.

6. Vorrichtung nach Anspruch 5, dadurch gekennzeichnet, daß der Träger (12) gabelartige Enden mit Ausnehmungen (52, 54) für den Durchtritt der Umlenkwalzen bzw. -rollen (32, 34) hat.

7. Vorrichtung nach wenigstens einem der Ansprüche 1 bis 6, dadurch gekennzeichnet, daß der Druckzylinder (26) am bzw. im Träger (12) an demjenigen Ende befestigt ist, das dem Gelenk (14) gegenüberliegt.

8. Vorrichtung nach wenigstens einem der Ansprüche 1 bis 6, dadurch gekennzeichnet, daß der Druckzylinder mit dem Schlitten (20) fest verbunden ist, in Bezug auf den der Träger (12) mittels einer Kulissenführung (22, 24) verschieblich angeordnet ist.

9. Vorrichtung nach wenigstens einem der Ansprüche 1 bis 8, dadurch gekennzeichnet, daß zur Begrenzung des Verschiebeweges zwischen Schlitten (20) und Träger (12) wenigstens ein verstellbarer Anschlag (44, 46) vorhanden ist.

10. Vorrichtung nach Anspruch 9, gekennzeichnet durch solche Anordnung des bzw. jedes Anschlages (44, 46), daß das Gerät (G) in Bezug auf den Schlepper in wenigstens zwei vorgegebenen Seitenpositionen fahrbar ist.

**Claims**

1. A hitching device for use in agriculture, in tree plantations and the like, wherein a tractor carries a tool (G) with a tension bar upon which there acts the hitching device (10) having a pressure cylinder (26) which is connected, on the one hand, to a carriage (20) and, on the other hand, to a beam (12) of a slide track (18) extending substantially transversely to the direction of travel, characterised in that the carriage (20) and the beam (12) are connected by a control cable or chain (30) actuable by the pressure cylinder (26), the ends of the control cable or chain (30) which are guided over deflection cylinders or rollers (32, 34) being fixed, on the one hand, to the carriage (20) and, on the other hand, to the beam (12).

2. A device according to claim 1, characterised in that the pressure cylinder (26) is a lifting and forcing cylinder and is provided with piston rods (36, 38) which pass therethrough on either side and whose ends each hold a deflection cylinder or roller (32 and 34) of the control cable or chain (30).

3. A device according to claim 1 or 2, characterised in that the carriage (20) is or can be connected to the rotating shaft (W) of the tool (G) and the beam (12) is or can be connected to a frame part (16) of the tool.

4. A device according to claim 3, characterised in that one end of the beam (12) has a joint (14) for connection to the frame part (16) and the frame part (16) is supported so as to be variable in length at a distance from the joint (14) on another part of the beam (12) (Figures 1 and 5).

5. A device according to one of claims 1 to 4, characterised in that the beam (12) is constructed as a hollow box with guide webs (24) for the carriage (20).

6. A device according to claim 5, characterised in that the beam (12) has fork-like ends with openings (52, 54) for the passage of the deflecting cylinders or rollers (32, 34).

7. A device according to at least one of claims 1 to 6, characterised in that the pressure cylinder (26) is fixed on or in the beam (12) at the end opposite the joint (14).

8. A device according to at least one of claims 1 to 6, characterised in that the pressure cylinder is rigidly connected to the carriage (20) with respect to which the beam (12) is arranged movably via a slideway (22, 24).

9. A device according to at least one of claims 1 to 8, characterised in that at least one adjustable stop (44, 46) is provided between the carriage (20) and the beam (12) to limit the path of movement.

10. A device according to claim 9, characterised by an arrangement of the or each stop (44, 46) such that the tool (G) can be driven in at least two predetermined lateral positions with respect to the tractor.

**Revendications**

1. Dispositif d'attelage à utiliser dans des travaux agricoles, dans des plantations d'arbres, et similaires dans lesquels un tracteur porte un dispositif de travail (6) avec une poutre de traction sur laquelle s'accroche le dispositif d'attelage (10) qui comporte un vérin (26) qui est relié d'une part à un coulisseau (20) et d'autre part à un support (12) d'une glissière de guidage (18) disposée sensiblement transversale à la direction de marche, caractérisée en ce que le coulisseau (20) et le support (12) sont reliés par une liaison à câble ou à chaîne (30) actionnable au moyen du vérin (26), les extrémités liaison à cable ou à chaîne (30) étant guidées par les poulies de renvoi (32, 34), et fixées d'une part au coulisseau (20) et d'autre part au support (12).

2. Dispositif selon la revendication 1, caractérisé en ce que le vérin (26) est à double effet et comporte des tiges de piston (36, 38) faisant saillie de part et d'autre, dont les extrémités sont respectivement reliées à des poulies de renvoi (32) ou (34) de la liaison à câble ou à chaîne.

3. Dispositif selon la revendication 1 ou 2, caractérisé en ce que le coulisseau (20) est relié, ou peut être relié, à l'arbre tournant (W) du dispositif (G) et en ce que le support (12) est relié, ou peut être relié, à une partie de bâti (16) du dispositif.

4. Dispositif selon la revendication 3, caractérisé en ce qu'une extrémité du support (12) présente une articulation (14) en vue d'une liaison avec la partie de cadre (16), et que cette dernière est reliée à une autre partie du support (12) écartée de l'articulation (14) par une liaison de longueur réglable (Fig. 1 et 5).

5. Dispositif selon l'une des revendications 1 à 4, caractérisé en ce que le support (12) présente une structure en caisson creux comportant des pièces (24) de guidage pour le coulisseau (20).

6. Dispositif selon la revendication 5, caractérisé en ce que le support (12) comporte des extrémités en forme de fourche comportant des évidements (52, 54) pour le passage des poulies de renvoi (32, 34).

7. Dispositif selon l'une au moins des revendications 1 à 6, caractérisé en ce que le vérin (26) est fixé sur ou dans le support (12) sur l'extrémité qui est opposée à l'articulation (14).

8. Dispositif selon l'une au moins des revendications 1 à 6, caractérisé en ce que le vérin est lié de façon fixe au coulisseau (20), par rapport auquel le support (12) est disposé à coulissement au moyen d'un guidage à coulisse (22, 24).

9. Dispositif selon l'une au moins des revendications 1 à 8, caractérisé en ce qu'il existe au moins une butée réglable (44, 46) pour limiter le coulissement entre le coulisseau (20) et le support (12).

10. Dispositif selon la revendication (9), caractérisé par une disposition telle de la butée ou de chaque butée (44, 46) que le dispositif (G) est mobile par rapport au tracteur pour atteindre au moins deux positions latérales préalablement déterminées.

Fig. 1

Fig. 4

Fig. 2

Fig. 3

Fig. 5